# EUROPEAN PATENT APPLICATION

(11) **EP 2 551 683 A1**
(43) Date of publication of application: **30.01.2013**
(21) Application number: 10848400.7
(22) Date of filing: 25.03.2010
(51) Int. Cl.: G01R 22/00, H02J 3/38, H02J 13/00, H04L 29/02

(54) **DATA TRANSMISSION DEVICE**

(71) Applicant: Mitsubishi Electric Corporation, Tokyo 100-8310 (JP)
(72) Inventor: ANDO, Noboru, Tokyo 100-8310 (JP)
(74) Representative: Pfenning, Meinig & Partner GbR
(86) International application number: PCT/JP2010/055252
(87) International publication number: WO 2011/118007

(57) **Abstract**

A data transmission device 40 includes a data collection unit 47 that collects a plurality of types of data including data from a power conditioner 20 that converts direct-current power generated by a solar battery 10 into alternating-current power, a data-importance addition unit 42 that adds first importance when the data collected by the data collection unit 47 is not data collected from the power conditioner 20, adds second importance that is more important than the first importance when the data collected by the data collection unit 47 is operation data collected from the power conditioner 20, and adds third importance that is more important than the second importance when the data collected by the data collection unit 47 is error occurrence information collected from the power conditioner 20, a data holding unit 41 that holds the data to which the importance is added, and a data transmission unit 2 that immediately transmits data that is held in the data holding unit 41 and to which the third importance is added, transmits data to which the second importance is added at a periodic time, and transmits data to which the first importance is added along with data to which the second or third importance is added.

## Description

### Field

The present invention relates to a data transmission device that collects data such as an operating condition of a device in a solar power generation system and transmits the data to a server or the like via a communication line.

### Background

As a data transmission device conventionally used in a solar power generation system, a device with a technique of collecting data from a device/apparatus or a sensor that is a target of data collection and of transmitting the data to a destination (such as a server or a monitoring center) at a certain time interval is disclosed (see, for example, Patent Literature 1). In such a regular data-transmission function, data transmission is performed regardless of the presence of data from the system.

However, because solar batteries generate power depending on the amount of solar-radiation, the power cannot be obtained during the night or the like. When regular data transmission is performed even if meaningful data cannot be obtained from the system, wasteful communication traffic and communication expenses are incurred.

### Citation List

### Patent Literature

Patent Literature 1: Japanese Patent Application Laid-open No. 2000-314752

### Summary

### Technical Problem

That is, according to a data transmission device in a conventional solar power generation system, as a timing of communicating collected data (such as uploading it), the data is generally transmitted at every predetermined period of time regardless of the presence of data, and the data transmission is functioned regardless of the presence of data, the content thereof, the importance thereof and the like. Therefore, data transmission is performed even for data with a low priority or when the amount of data is small, and thus wasteful communication expenses are incurred at every predetermined period of time.

The present invention has been achieved in view of the above problems, and an object of the present invention is to provide a data transmission device in a solar power generation system that can reduce wasteful communication costs in the solar power generation system and that transmits data immediately in an emergency.

### Solution to Problem

In order to solve the above problem and in order to attain the above object, a data transmission device of the present invention, includes: a data collection unit that collects a plurality of types of data including data from a power conditioner that converts direct-current power generated by a solar battery into alternating-current power; a data-importance addition unit that adds first importance when the data collected by the data collection unit is not data collected from the power conditioner, adds second importance that is more important than the first importance when the data collected by the data collection unit is operation data collected from the power conditioner, adds third importance that is more important than the second importance when the data collected by the data collection unit is error occurrence information collected from the power conditioner, and adds importance depending on importance of the data to corresponding data; a data holding unit that holds the data to which the importance is added; and a data transmission unit that immediately transmits data that is held in the data holding unit and to which the third importance is added, transmits data to which the second importance is added at a periodic time, and transmits data to which the first importance is added along with data to which the second or third importance is added.

### Advantageous Effects of Invention

According to the present invention, data can be transmitted immediately when an abnormality has occurred in a solar power generation system and wasteful data transmission is eliminated, so that communication expenses can be reduced.

### Brief Description of Drawings

FIG. 1 is a configuration diagram of a solar power generation system including a data transmission device according to an embodiment of the present invention.
FIG. 2 is an example of a configuration of data for transmission.

### Description of Embodiments

Exemplary embodiments of a data transmission device according to the present invention will be explained below in detail with reference to the accompanying drawings. The present invention is not limited to the embodiments.

### First embodiment.

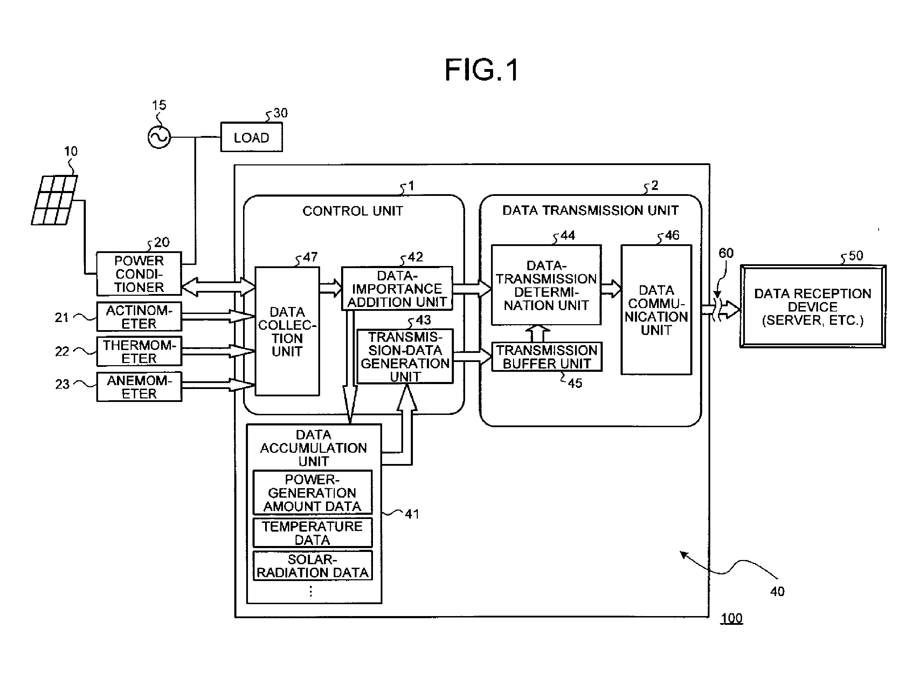

FIG. 1 is a configuration diagram of a solar power generation system 100 including a data transmission device according to a first embodiment of the present invention.

The solar power generation system 100 includes a solar battery 10 that generates direct-current power by solar light, a power conditioner 20 that converts direct-current power obtained from the solar battery 10 into alternating-current power and interconnects the alternating-current power to a system power supply 15, a load 30 such as a household electrical appliance used in a house, a data transmission device 40 that collects data such as an operating condition of the solar power generation system and operation data (such as generated power and integral power consumption) from the power conditioner 20 and meteorological data from an actinometer 21, a thermometer 22, and an anemometer 23, a communication line 60 that is a transmission path for data transmission of the data transmission device 40, and a data reception device 50 that receives and accumulates data transmitted via the communication line 60.

The data transmission device 40 transmits collected data to the server 50 or a monitoring center and the like via the communication line 60. The data transmission device 40 includes a data collection unit 47 that collects data from the power conditioner 20, the actinometer 21, the thermometer 22, and the anemometer 23 and the like, a data-importance addition unit 42 that adds importance to data collected by the data collection unit 47, a data accumulation unit 41 that accumulates data such as generated power, the amount of solar-radiation, and the temperature to which importance is added by the data-importance addition unit 42, a transmission-data generation unit 43 that processes the data of the data accumulation unit 41 into data to be transmitted to the server 50, a data-transmission determination unit 44 that determines a transmission timing depending on importance added to data, a transmission buffer unit 45 that is a buffer for data on standby for transmission, and a data communication unit 46 that communicates with the communication line 60 to communicate with the server 50 or the like.

The data collection unit 47, the data-importance addition unit 42, and the transmission-data generation unit 43 are provided in a control unit 1 of the data transmission device 40. The data-transmission determination unit 44, the transmission buffer unit 45, and the data communication unit 46 are provided in a data transmission unit 2 of the data transmission device 40.

An operation of the solar power generation system 100 according to the present embodiment is explained below. The solar battery 10 generates direct-current power depending on the amount of solar-radiation. The power conditioner 20 converts direct-current power from the solar battery 10 into alternating-current power. The alternating-current power is consumed by the load 30 such as a household electrical appliance used in a house, and unconsumed power is output to the system power supply 15 (reverse power flow).

The data transmission device 40 requests the power conditioner 20 to transmit data at every predetermined period of time. In response to the request from the data transmission device 40, the power conditioner 20 returns operation data such as an operating condition of the power conditioner 20 and generated power. Because the power conditioner 20 is operated by generating its own control power supply from the direct-current generated power by the solar battery 10, the power conditioner 20 cannot be operated during the night. Therefore, the power conditioner 20 can return the data in response to the request from the data transmission device 40 during the day, but does not return the data during the night.

The data transmission device 40 also requests the actinometer 21, the thermometer 22, and the anemometer 23 to transmit data at every predetermined period of time. In response to the request from the data transmission device 40, the actinometer 21, the thermometer 22, and the anemometer 23 return meteorological data. In this way, the data collection unit 47 of the data transmission device 40 collects operation data and meteorological data at every predetermined period of time.

The data-importance addition unit 42 within the data transmission device 40 adds importance to data collected at every predetermined period of time as follows.
[1] The importance is specified as "medium" when there is a reply from the power conditioner 20 and operation data (generated power, integral power consumption, and operating condition) can be obtained.
[2] The importance is specified as "high" that is more important than the "medium" when there is a reply from the power conditioner 20, and error occurrence information (which informs that an abnormality or a failure has occurred in the power conditioner 20 or in the solar battery 10) is included in the reply.
[3] The importance is specified as "low" that is less important than the "medium" when only meteorological data from the actinometer 21, the thermometer 22, and the anemometer 23 is provided (when there is no reply from the power conditioner 20).

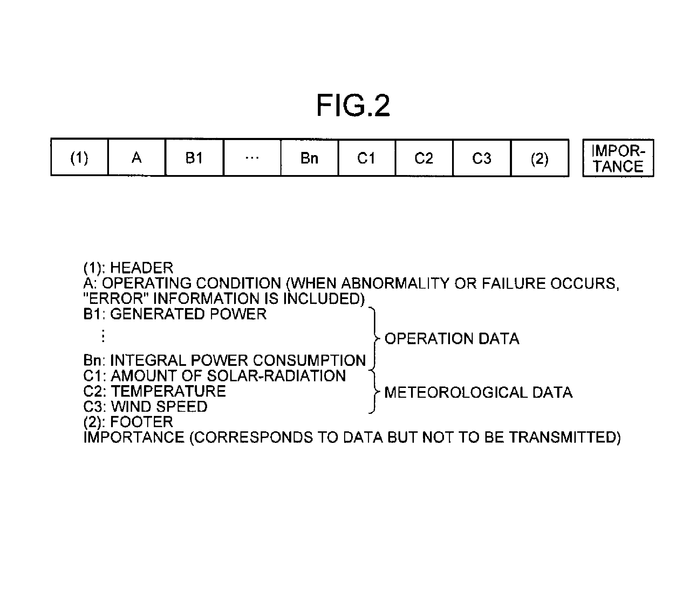

The data accumulation unit 41 within the data transmission device 40 accumulates data to which importance is added. The transmission-data generation unit 43 within the data transmission device 40 processes the data of the data accumulation unit 41 into data to be transmitted to the server 50. FIG. 2 is an example of a configuration of data for transmission. The "importance" corresponds to the data for transmission and is used for deciding a timing of transmitting the transmission data; however, the "importance" itself is not transmitted eventually. The transmission data generated by the transmission-data generation unit 43 is sent to the transmission buffer unit 45 and is temporarily held therein.

The data-transmission determination unit 44 within the data transmission device 40 determines whether it is a timing of the data communication unit 46 to perform transmission to the server 50 under the following conditions based on the "importance" of the transmission data held in the transmission buffer unit 45.
[1] A case where data of the "high" importance is present in the transmission buffer unit 45.
[2] A case where data of the "medium" importance is present in the transmission buffer unit 45.
[3] A case where only data of the "low" importance is present in the transmission buffer unit 45.

In the case [1], data is transmitted immediately before a time of regular transmission (regardless whether a predetermined transmission interval has elapsed). In the case [2], data is transmitted at the time of regular transmission (at a periodic time when every predetermined transmission interval elapses). In the case [3], data is not transmitted even at the time of regular transmission (even when a predetermined transmission interval has elapsed). Therefore, it suffices that data of the "low" importance is transmitted along with data of the "high" or "medium" importance when such data is present in the transmission buffer unit 45.

As explained above, the importance is added to the data collected by the data transmission device 40 at every predetermined period of time, and based on the importance, the timing of transmitting data to the data reception device 50 such as a server is decided. Accordingly, when a measured-rate charging system is applied to a communication line, it is possible to reduce communication expenses. When an abnormality such as an error occurs, information of the abnormality is transmitted immediately even before the time of regular transmission. Consequently, any time lag does not occur in system monitoring and a recovery operation can be started quickly.

### Second embodiment.

A configuration of the solar power generation system 100 including a data transmission device according to a second embodiment of the present invention is shown by FIG. 1 as in the first embodiment.

In the second embodiment, the importance explained in the first embodiment is represented by a numerical value such as a score, the numerical value is cumulatively added every time each data is collected, and the data-importance addition unit 42 adds the importance as a cumulative value to the latest data.

For example, a method of cumulatively adding the importance in the data-importance addition unit 42 is performed as follows.
[1] When there is a reply from the power conditioner 20 and operation data (generated power, integral power consumption, and operating condition) is obtained, 4 is added to the importance.
[2] When there is a reply from the power conditioner 20 and error occurrence information (which informs that an abnormality or a failure has occurred in the power conditioner or in the solar battery 10) is included in the reply, because the importance is higher than that of the case [1], 16 is added to the importance.
[3] When only meteorological data from the actinometer 21, the thermometer 22, and the anemometer 23 is provided (when there is no reply from the power conditioner 20), because the importance is less than that of the case [1], 1 is added to the importance.

It is assumed here that an interval during which the data transmission device 40 collects operation data and meteorological data is T, a time interval of regular transmission by the transmission buffer unit 45 is 4T, and a threshold when the data-transmission determination unit 44 determines whether transmission is performed is 16. Data transmission of the data transmission device 40 is then performed as follows.

In the case [1], 4 is added to the importance every time data is collected and thus the importance becomes equal to or larger than the threshold for four times, and the interval of data transmission is equal to the interval of regular transmission. When an error occurs as in the case [2], 16 is added to the importance and thus the importance becomes equal to or larger than the threshold for only once. Therefore, data transmission is performed immediately. That is, when an error occurs, a value equal to or larger than the threshold is added. In the case [3], because 1 is added to the importance every time data is collected, the importance becomes equal to or larger than the threshold for sixteen times, and the interval of data transmission is four times the interval of regular transmission.

That is, the data-transmission determination unit 44 always determines the importance of the latest data sent to the transmission buffer unit 45 with respect to the threshold. When data with its importance being equal to or larger than a predetermined threshold is sent to the transmission buffer unit 45, this data is transmitted along with all pieces of data with their importance being less than the predetermined threshold held in the transmission buffer unit 45 since the data communication unit 46 performs data transmission in the previous time. A cumulative value that is the importance added to the latest data is reset to 0 every time the data communication unit 46 performs transmission.

As explained above, according to the second embodiment, when an operation of a solar power generation system stops during the night, the interval of data transmission is extended and thus communication expenses can be reduced. However, when an abnormality occurs, data transmission is performed immediately and thus measures for quick recovery can be taken.

Furthermore, even when only meteorological data with low importance is collected such as during the night, there may be a case where the meteorological data needs to transmitted regularly, although this transmission may be less frequent. The second embodiment can handle such a case.

Collected data can be transmitted at an effective timing. Further, even when there are a plurality of data transmission devices, their data-transfer timings vary, and thus an effect of avoiding traffic concentration can be also expected.

### Third embodiment.

A configuration of the solar power generation system 100 including a data transmission device according to a third embodiment of the present invention is shown by FIG. 1 as in the first embodiment.

According to the third embodiment, the data-importance addition unit 42 adds importance such as "high", "medium", or "low to data collected at every predetermined period of time similarly to the first embodiment. However, in the present embodiment, the communication line 60 includes a plurality of types of communication lines. That is, the communication line 60 includes an inexpensive communication line such as an ADSL for a standard household and a communication line that is measured-rate and expensive, but has high reliability, such as an analog telephone line.

According to the present embodiment, the data communication unit 46 performs transmission by switching communication lines between a case of immediately transmitting data of the "high" importance and a case of regularly transmitting data of the "medium" importance.

That is, [1] when data of the "medium" importance is regularly transmitted, data transmission is performed via an inexpensive communication line such as an ADSL for a standard household. Meanwhile, [2] when data of the "high" importance is immediately transmitted, data transmission is performed via a communication line that is measured-rate and expensive, but has high reliability, such as an analog telephone line. With this configuration, data of high importance can be transmitted reliably and quickly, and a data monitoring system with high reliability can be established.

Furthermore, the invention of the present application is not limited to the embodiments described above, and the invention can be variously modified without departing from the scope of the invention when the invention is carried out. Further, these embodiments include various steps of inventions, and various inventions can be derived from an appropriate combination among a plurality of disclosed constituent elements. For example, even if some constituent elements among all of the constituent elements described in the embodiments are omitted, the problems described in the section of Technical Problem can be solved, and when the effects described in the section of Advantageous Effects of Invention are obtained, the configuration in which some constituent elements are omitted can be derived as an invention. In addition, constituent elements common to different embodiments can be appropriately combined.

### Industrial Applicability

As described above, the data transmission device according to the present invention is useful as a data transmission device that collects data such as an operating condition of a device and transmits the data to a server or the like via a communication line, and the data transmission device is particularly suitable for data transmission of a solar power generation system or the like.

### Reference Signs List

1 control unit
2 data transmission unit
10 solar battery
15 system power supply
20 power conditioner
21 actinometer
22 thermometer
23 anemometer
30 load
40 data transmission device
41 data accumulation unit
42 data-importance addition unit
43 transmission-data generation unit
44 data-transmission determination unit
45 transmission buffer unit
46 data communication unit
47 data collection unit
50 data reception device
60 communication line
100 solar power generation system

## Claims

1. A data transmission device comprising:
a data collection unit that collects a plurality of types of data including data from a power conditioner that converts direct-current power generated by a solar battery into alternating-current power;
a data-importance addition unit that adds first importance when the data collected by the data collection unit is not data collected from the power conditioner, adds second importance that is more important than the first importance when the data collected by the data collection unit is operation data collected from the power conditioner, adds third importance that is more important than the second importance when the data collected by the data collection unit is error occurrence information collected from the power conditioner, and adds importance depending on importance of the data to corresponding data;
a data holding unit that holds the data to which the importance is added; and
a data transmission unit that immediately transmits data that is held in the data holding unit and to which the third importance is added, transmits data to which the second importance is added at a periodic time, and transmits data to which the first importance is added along with data to which the second or third importance is added.

2. A data transmission device comprising:
a data collection unit that collects a plurality of types of data including data from a power conditioner that converts direct-current power generated by a solar battery into alternating-current power;
a data-importance addition unit that specifies in advance an additional value that becomes larger as the importance becomes higher for the data of the plurality of types, calculates importance that is a value with an additional value specified for corresponding data being cumulatively added every time data is collected by the data collection unit, and adds corresponding importance to the corresponding data;
a data holding unit that holds the data to which the importance is added; and
a data transmission unit that transmits corresponding data when the importance added to the data held in the data holding unit has become equal to or larger than a predetermined threshold, wherein
the data-importance addition unit sets the additional value specified for data of error occurrence information collected from the power conditioner to be equal to or larger than the threshold, and resets the importance every time the data transmission unit transmits data.

3. The data transmission device according to claim 1, wherein
the data transmission unit transmits data to which the second importance is added via a first communication line, and
transmits data to which the third importance is added via a second communication line whose data-transmission reliability is higher than that of the first communication line.
